# EUROPEAN PATENT SPECIFICATION

(11) **EP 3 801 000 B1**
(45) Date of publication and mention of the grant of the patent: **06.12.2023**
(21) Application number: 19743008.5
(22) Date of filing: 17.05.2019
(51) Int. Cl.: A01J 5/017, A01J 7/04, A01K 1/12

(54) **SYSTEM FOR MILKING OF A DAIRY ANIMAL**
SYSTEM ZUM MELKEN EINES MILCHTIERES
SYSTÈME DE TRAITE D'UN ANIMAL LAITIER

(30) Priority: 24.05.2018 NL 2020983
(43) Date of publication of application: 14.04.2021
(73) Proprietor: Lely Patent N.V., 3147 PB Maassluis (NL)
(72) Inventor: DE WAARD, Nicky, 3147 PB Maassluis (NL)
(74) Representative: Octrooibureau Van der Lely N.V.
(86) International application number: PCT/NL2019/050288
(87) International publication number: WO 2019/226044

(56) References cited:
- EP-A1- 1 223 800
- WO-A1-2007/050012
- WO-A1-2017/051414
- US-A- 4 838 207

## Description

The present invention relates to a system for fully automatically milking a dairy animal.

In particular, the invention relates to a system for fully automatically performing a teat-related operation on a dairy animal, comprising a treatment location for receiving the dairy animal, a treatment device which is configured for performing the teat-related operation on the dairy animal, a teat-detecting device for determining a teat position of the teat of the dairy animal, a dairy animal position-determining device for determining an animal position of said dairy animal with respect to the milking stall of the dairy animal position-determining device, a robot arm for moving the treatment device towards the teat, and a control device which is configured to control the robot arm on the basis of the determined animal position and the determined teat position.

Such systems are known per se. For example, US4838207 discloses a system in which a plate is mechanically pushed against the rear end of a dairy animal. This plate is coupled to the robot arm, so that the robot arm will follow every displacement of the dairy animal in the longitudinal direction.

Furthermore, WO2007/050012 discloses a system according to the preamble of claim 1 in which a visual detection system determines an animal position in the milking stall in the longitudinal direction, and in which the robot arm for attaching milking cups is sent to a starting position on the basis of the determined animal position.

In general, a control unit will be able to control the robot arm using the determined animal position and advantageously also using information stored in a memory relating to the average position of the udder and/or the teats with respect to the sensor employed (plate, visual detection system, etc.), so that it can, for example, follow animal movements or can be moved to a starting position for teat detection, so that said teat detection can then take place quickly and efficiently.

In practice, the known systems have been found not to be very reliable and/or comfortable for the dairy animals. Thus, contact with the plate in the system from US4838207 has been found to be unpleasant for the animals. The visual detection system from WO2007/050012 is susceptible to dust and other dirt and in particular to moisture in the air. However, an animal shed for dairy animals is a very dirty environment containing large amounts of dust and other dirt, but also a lot of vapour which partly originates from the animals themselves and is partly due to the fact that the animal shed is often in open communication with the outside air and may thus be susceptible to mist formation, mainly at low temperatures. In addition, the visual detection systems used, such as a 3D camera, are often still not sufficiently quick and accurate.

The use of radar as an option to determine the teat position, but not the animal position, has been mentioned before as such, for example in WO2010/060693. The latter mentions a laser source and one or more laser detectors, a radar, a sonar and/or an imaging device, for example in the form of a stereo camera, as options. But of all the said options, it is exactly the radar which has never been elaborated upon, neither in this document, nor, as far as is known, anywhere else. The probable reason for this is, inter alia, that it has hitherto been too difficult to construct a sufficiently inexpensive, energy-efficient and reliable radar system which is sufficiently compact to be placed underneath a dairy animal, as in said document on a robot arm, and which, in addition, combines the required accuracy for teat detection with sufficient speed to be able to react to movements of the dairy animal. Furthermore, there is no indication of a difference in the suitability of all these detection options.

It is an object of the present invention to provide an alternative system which makes it more readily possible to perform the teat-related operation in a quick and reliable manner.

This object is achieved by the invention by means of a dairy animal treatment system according to claim 1, for fully automatically performing a teat-related operation on a dairy animal, comprising a treatment location for receiving the dairy animal, a treatment device which is configured to perform the teat-related operation on the dairy animal, a teat-detecting device for determining a teat position of the teat of the dairy animal, a dairy animal position-determining device for repeatedly determining an animal position of said dairy animal with respect to the milking stall and/or the dairy animal position-determining device, a robot arm for moving the treatment device to the teat and a control device which is configured to control the robot arm on the basis of the determined animal position and the determined teat position, wherein the dairy animal position-determining device comprises a mm-wavelength radar device.

The present invention is based on the view that radar systems, and in particular the mm-wavelength radar systems, are eminently suitable for determining the much coarser animal position. After all, compared to the teat position, the animal position only has to be determined approximately, as it only provides a starting position for the teat-related operation. And in particular with dairy cows, this starting position can be roughly determined in a simple manner as a dairy cow is of considerable size, both in absolute terms and compared to a teat (tip). In practice, the teat-detecting device will furthermore be able to perform quickly and reliably in a relatively large range of starting positions and it should furthermore be noted that the connection between expected teat positions and the rear end of the dairy animal will not be known with a great degree of accuracy either. The radar device is furthermore virtually unsusceptible to soiling as is present in a dairy animal environment. For example, the device may be accommodated in a plastic housing, through which the (mm) radar radiation can pass virtually unhindered.

All this not only ensures that the requirements which have to be met can be much less stringent. It also means that the radar system can be of simpler design and thereby in turn also quicker, so that following movements of the dairy animal is more efficient. In other words, using the system of the invention, an animal position can be determined and/or followed (more) quickly and (more) reliably, and thus a teat-related operation can be performed on that dairy animal in a quick(er) and (more) reliable way.

Particular embodiments are described in the attached subclaims and in the following part of the description.

In embodiments, the radar device comprises a frequency-modulated CW radar device. The standard radar measuring method of emitting a radar pulse and measuring the return time can be used as such in the radar device of the system according to the invention, although the return time will, in a usual treatment location, be in the order of magnitude of 10 ns, and a desired range resolution will require a temporal resolution in the order of magnitude of 0.1 ns. When using a CW (= continuous wave) radar signal, the return signal will also be a CW signal. By applying frequency modulation to the transmitted CW radar signal, the frequency of the received signal will deviate from the frequency of the signal which was transmitted at the moment the reflected signal was received. This deviation is a measure of the distance between the source and the reflecting object. The modulation is advantageously linear with modulation slew rate A [Hz/s] and in that case said frequencies will show a constant difference. By mixing the transmitted and received signal, the difference signal can then be represented as a constant tone whose frequency *f*ᵥ directly indicates the distance D according to D = *f*ᵥ·c/2A. Obviously, a different modulation may result in a different equation.

In embodiments, the radar device is configured to generate a chirp, in particular with a bandwidth of 1 GHz to 5 GHz. A 'chirp' is also referred to as a 'sweep' in this case and relates to a decrease or increase of the radar frequency. With such a large bandwidth, it is readily possible to achieve a sufficient degree of accuracy in determining the distance, although other, for example smaller bandwidths, are not excluded.

In embodiments, the radar device comprises a 77 GHz band radar device. This means that the frequency of the radar signal is in the 77 GHz band. This encompasses, for example, the band of 76-77 GHz or the band of 76-81 GHz. With this band, a satisfactory detection reliability is obtained, together with a satisfactory accuracy. In view of the range of the available frequencies, the (wide) 77 GHz band will thus be able to produce results which are up to 20x better with regard to range resolution and accuracy. In particular, the range resolution of a 77 GHz system may be 4 cm, against 75 cm for a 24 GHz radar. This already indicates that the aforementioned teat detection by means of these systems is not yet achievable, but also that position detection of a dairy animal is readily possible, and in particular with the 77 GHz system. Yet another advantage of the 77 GHz band over the 24 GHz band is that it can measure the speed of a reflecting object more quickly and up to three times more accurately (due to it being proportional to the frequency).

The associated radar antennae for transmitting and receiving have to be small enough to be incorporated in a dairy animal treatment system according to the invention in a simple manner. Incidentally, the radar device may also be chosen from other mm-wavelength radar devices in the 40-300 GHz band. This mm band offers the advantages regarding accuracy and compactness already mentioned above compared to the 24 GHz band which was used for all kinds of applications in the past. It should be noted here that the ultrawide band at 24 GHz (from 21.65 to 26.65 GHz) known per se will be phased out in 2022 and will consequently no longer be an alternative.

In embodiments, the dairy animal position-determining device is configured for at least looking down obliquely onto the dairy animal in the milking stall and to determine the position of a rear end of the dairy animal as the animal position. The rear end of the dairy animal often serves as a reference position, since the position of the udder with respect to that rear end can only vary to a limited degree with the position of the animal and with, for example, the time since the last milking operation. In addition, dairy cows in particular have a rear end which is a virtually rectangular block, so that said position can easily be determined from the radar signal. In fact, in these embodiments it may even suffice to determine the (absolute) distance between the radar device and said rear end, being the "top edge" of that rear end. In this case, the premise is that, at the treatment location, the dairy cow can move mainly in the longitudinal direction and will not vary in the vertical direction, and that the dairy animal position-determining device "looks" in this longitudinal direction.

In embodiments, the control unit furthermore comprises information about a position of the teats with respect to said position of the rear end of said dairy animal. In embodiments, the control device is configured to bring the robot arm to a starting position on the basis of the determined animal position for swinging in under the dairy animal.

In this way, the system is able to bring the robot arm quickly and reliably to a good starting position for teat recognition, and thus the teat-related operation, on the basis of the determined animal position, in this case the determined position of the rear end. Said information may comprise literature information, such as an average position of the udder or the teats with respect to said position of the rear end, for example based on breed, age and/or time since the last milking operation. Said information may also comprise historical information for each dairy animal, such as is known per se from the prior art.

In embodiments, the control device is configured to follow said animal position while the teat-related operation is being performed. For example, the teats of the udder are not visible or not clearly visible during the teat-related operation, whereas it is nevertheless important to keep the robot arm with the treatment device and the teats close together or at least in the same position with respect to each other. In that case, it is advantageous to use the connection between udder/teat position on the one hand and the animal position, in this case the position of the rear end, on the other hand.

In embodiments, the treatment location comprises a milking stall on solid ground or on a rotatable platform. In embodiments, the treatment device is configured for at least one of cleaning, stimulating, milking and spraying a teat of the dairy animal. In this case, the teat-related operation therefore consists of or comprises cleaning, stimulating, milking or spraying the teats. These are the most important treatments of the teats of a dairy animal which have so far been automated. It will be clear that milking is the most important from an economic point of view, in which case the reader is referred to the known milking robots. These are also configured for cleaning and stimulating the teats. In addition, there are also treatment devices which apply teat treatment agent ("dip") to the teats. This may be combined on the robot arm or may also be provided on a separate robot arm. In particular, the treatment device comprises a teat cup, teat brush and/or spray nozzle. These treatment devices are known per se from the prior art and will therefore not have to be explained in any more detail here.

The invention will be explained in more detail below with reference to the drawing, which shows a non-limiting embodiment, and in which the sole figure is a diagrammatic side view of a system according to the invention.

The figure diagrammatically shows a side view of a dairy animal treatment system 1 according to the invention. The system 1 comprises a milking stall 2, a radar device 3 with an effective "image field" 4, a control unit 5 and a robot arm end part 6 with a milking cup 7, and a teat-detecting device 8 with an image field 9. Reference numeral 15 denotes a cow, having teats 16 and a rear end 17.

The milking stall 2 may be, for example, a stand-alone milking stall as is usual with individual milking robots, such as the Lely Astronaut^{®}-system or the DeLaval VMS-system. Alternatively, it may be a box in a multibox system or a treatment location, such as a milking position on a carousel.

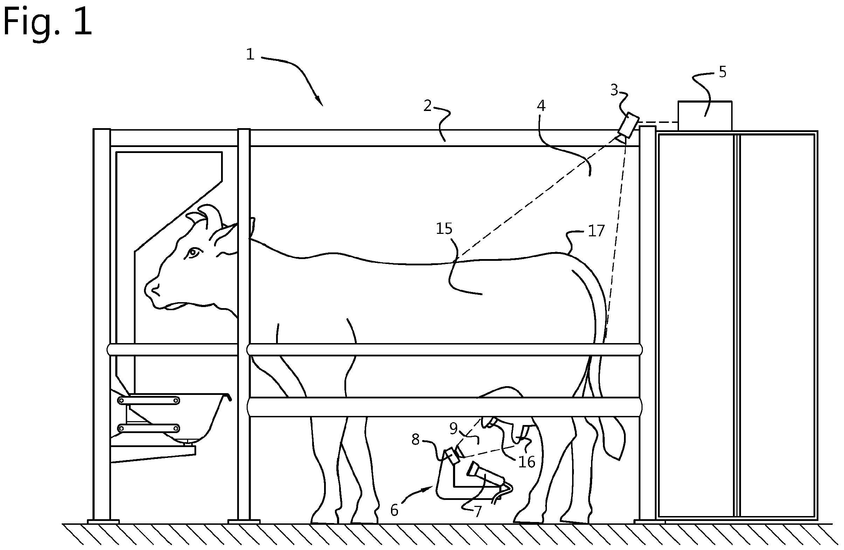

Reference numeral 3 denotes a mm-wave radar device, such as the IWR1443 by Texas Instruments, see e.g. http://www.ti.com/product/IWR1443. This web page also refers to technical documents, including some eight "white papers", containing background information and applications. In the present context, the white paper "The fundamentals of millimetre wave sensors" by lovescu *et* al, as can be downloaded from the abovementioned web page, is of particular interest. This describes, inter alia, the method of calculating distance, the method of calculating speed, etc. Thus, it is also possible to calculate the image field 4 of the radar device shown in Figure 1 in case there are two receiving antennae which are able to calculate, for example, a speed from the reflected signals, see in this context "Maximum angular field of view".

Reference numeral 5 denotes a control unit which is connected to the radar device 3 and receives, for example, distance or position information about the cow 15 from the latter. By means thereof, the control unit 5 furthermore controls a robot arm, of which only the end part 6 is shown in Figure 1. This end part 6 has four milking cups 7, of which only one is shown here in a rest position. The end part 6 furthermore has a teat-detecting device 8, such as a scanner or an optical 2D or 3D camera. The teat-detecting device 8 has an image field 9 for finding positions of the teats 16 of the cow 15.

A desired accuracy for the position of the teats 16 determined by the teat-detecting device is in the order of magnitude of 1 cm (slightly smaller than the teat cross section). This accuracy is not (yet) readily achievable by suitable radar devices which are sufficiently compact, quick, reliable and inexpensive. By contrast, achieving accuracy in determining the position of the cow 15 by means of the mm-wave radar device 3 is readily possible. This determined cow position can be used to swing in the robot arm in such a way that the robot arm, and in particular the end part 6 with the milking cups 7, does not hit the (legs of the) cow and also ends up, for example, in an advantageous starting position for determining the positions of the teats 16. To this end, it is possible, for example, to use a historical correlation between the position of the teats 16 with respect to the rear end 17 of the cow, either from several measurements/milking operations or from literature sources. In this case, the permissible deviation in swinging-in or starting position is much greater than the accuracy required when connecting a milking cup to a teat 16. It will be clear that the accuracy which is still sufficient when determining said cow position is much less strict and may, for example, be in the order of magnitude of 10 cm, which can be achieved relatively easily by said mm-wave radar devices.

In this case, the cow position is determined, for example, as the position of the rear end 17 of the cow, being the point which is situated closest to the radar device 3. In view of the general shape of the rear end of the cow 3, namely approximately block-shaped, the coordinate measured in the longitudinal direction of the cow is in particular a fixed value with regard to the cow. Also, even if the position of the closest point in the transverse direction on the cow 15 could vary slightly, this still does not make a difference for the location where the robot arm swings in. It should be noted in this case that the position of the radar device 3 is preferably sufficiently far behind the cow 15, because in case of, for example, a radar position in the centre above the cow, this correlation would be lost.

It follows from the above that, according to the invention, it is particularly easy for the control unit 5 to find a suitable swinging-in and starting position for (the end part 6 of) the robot arm by means of the radar device 3. It is therefore readily possible to make the milking robot as illustrated in Figure 1 quicker than known milking robots. In addition, the milking device will, under certain circumstances, also be more reliable than known milking robots. After all, compared to a known alternative, such as an optical camera, the radar device 3 is not susceptible, or at least less susceptible, to formation of condensation thereon, or dirt or dust, etc.

Furthermore, it should be noted here that the invention may also be used in other teat-treatment devices than milking devices, such as a spraying robot which sprays a teat dip on the teats 16 of the cow 15, as is compulsory in some countries. Such a spraying robot also has to be able to reliably find the teats 16, in which case it is equally possible to use the radar device 3 for determining the (approximate) position of the cow 15. Yet more alternatives relate to systems for prior cleaning and stimulating of the teats 16. This may be achieved, for example, by using a separate teat cup (not shown) which applies cleaning liquid to the teat 16 and collects it again, and is also able to stimulate the teat by means of this cleaning liquid and/or by means of suitable pulsation. Even if it is equipped with such a separate teat cup, the system according to the invention is particularly suitable for quickly and reliably attaching this teat cup. Alternatively, it is also possible to use cleaning and stimulating brushes for the separate teat cup, as are known per se from, for example, the Lely Astronaut^{®} milking robot system.

The dairy animal treatment systems as described above are able to quickly and reliably bring their respective teat-treatment device to the teats 16. If necessary, it is advantageous if the dairy animal treatment system can also follow or even predict the position of the cow 15 (or of course any other dairy animal, such as a goat). This may be advantageous for the control unit 5 in order to adjust the robot arm, if the cow 15 moves while the end part 6 swings in or while the cup 7 is brought to the teats 16, for example. It is also the case that, if for example milking cups 7 are attached to the teats 16 of the cow 15 and are only connected to the robot arm via milking hoses, these milking cups 7 are at risk of being pulled off the teats if the cow moves too far from the robot arm. It is therefore advantageous if this robot arm, again particularly the end part 6, is moved by the control unit based on the animal position determined by means of the mm-wave radar device 3. The radar device 3 may repeatedly determine this position, such as at intervals of 0.5 s, 1 s, etc, or also virtually continuously. It is also possible for the radar device 3 to determine the speed of (the rear end 17 of) the cow 15, either by processing the change in time of the determined position or by a Doppler-FFT measurement by means of the transmitted radar signal which, to this end, now contains two "chirps" which are temporally separated from each other. To this end, the reader is referred to the white paper "The fundamentals of millimetre wave sensors" by lovescu *et al* which has already been mentioned above.

In fact, it is even generally the case that the invention offers advantages for a dairy animal treatment system for fully automatically performing a teat-related operation on a dairy animal, comprising a treatment location for receiving the dairy animal, a treatment device which is configured for performing the teat-related operation on the dairy animal, a teat-detecting device for determining a teat position of the teat of the dairy animal, a dairy animal position-determining device for repeatedly determining an animal position of said dairy animal with respect to the milking stall and/or the dairy animal position-determining device, a robot arm for moving the treatment device to the teat, and a control device which is configured to control, that is to say to move, the robot arm on the basis of the determined animal position, wherein the dairy animal position-determining device comprises a mm-wavelength radar device. This means that the invention achieves the same advantages, in principle for all embodiments mentioned above or below, in dairy animal treatment systems in which the robot arm is moved on the basis of the animal position determined by means of the mm-wave radar device. In other words, it is not necessary to move the robot arm on the basis of a determined teat position in order to achieve the advantages of the invention.

The illustrated and described embodiments are not intended to be limiting, but only serve to explain the explanation. The scope of protection of the invention is determined by the attached claims.

## Claims

1. Dairy animal treatment system (1) for fully automatically performing a teat-related operation on a dairy animal, comprising:
- a treatment location (2) for receiving the dairy animal,
- a treatment device (7) which is configured for performing the teat-related operation on the dairy animal,
- a teat-detecting device (8) for determining a teat position of the teat of the dairy animal,
- a dairy animal position-determining device for repeatedly determining an animal position of said dairy animal with respect to the milking stall and/or the dairy animal position-determining device,
- a robot arm (6) for moving the treatment device towards the teat, and
- a control device (5) which is configured to control the robot arm on the basis of the determined animal position and the determined teat position,
**characterized in that**
the dairy animal position-determining device comprises a mm-wavelength radar device (3).

2. System according to Claim 1, wherein the radar device comprises a frequency-modulated continuous wave radar device.

3. System according to one of the preceding claims, wherein the radar device is configured to generate a chirp, in particular having a bandwidth of between 1 GHz to 5 GHz.

4. System according to one of the preceding claims, wherein the radar device comprises a 77 GHz band radar device.

5. System according to one of the preceding claims, wherein the dairy animal position-determining device is configured for at least looking down obliquely onto the dairy animal in the milking stall and to determine the position of a rear end of the dairy animal as the animal position.

6. System according to claim 5, wherein the control unit furthermore contains information about a position of the teats with respect to said position of the rear end of said dairy animal.

7. System according to one of the preceding claims, wherein the control device is configured to bring the robot arm to a starting position for swinging under the dairy animal on the basis of the determined animal position.

8. System according to one of the preceding claims, wherein the control device is configured to follow said animal position while performing the teat-related operation.

9. System according to one of the preceding claims, wherein the treatment location comprises a milking stall on solid ground or on a rotatable platform.

10. System according to one of the preceding claims, wherein the treatment device is configured for at least one of cleaning, stimulating, milking and spraying a teat of the dairy animal, and comprises in particular a teat cup, teat brush and/or spray nozzle.

## Patentansprüche

1. Milchtierbehandlungssystem (1) zum vollautomatischen Durchführen eines zitzenbezogenen Vorgangs an einem Milchtier, das Folgendes umfasst:
- einen Behandlungsort (2) zum Empfangen des Milchtiers,
- eine Behandlungsvorrichtung (7), die zum Durchführen des zitzenbezogenen Vorgangs am Milchtier ausgelegt ist,
- eine Zitzendetektionsvorrichtung (8) zum Bestimmen einer Zitzenposition der Zitze des Milchtiers,
- eine Milchtierpositionsbestimmungsvorrichtung zum wiederholten Bestimmen einer Tierposition des Milchtiers mit Bezug auf den Melkstand und/oder die Milchtierpositionsbestimmungsvorrichtung,
- einen Roboterarm (6) zum Bewegen der Behandlungsvorrichtung zur Zitze und
- eine Steuervorrichtung (5), die dazu ausgelegt ist, den Roboterarm auf Basis der bestimmten Tierposition und der bestimmten Zitzenposition zu steuern,
**dadurch gekennzeichnet, dass**
die Milchtierpositionsbestimmungsvorrichtung eine mm-Wellenlängenradarvorrichtung (3) umfasst.

2. System nach Anspruch 1, wobei die Radarvorrichtung eine frequenzmodulierte Dauerstrichradarvorrichtung umfasst.

3. System nach einem der vorhergehenden Ansprüche, wobei die Radarvorrichtung dazu ausgelegt ist, ein Chirp zu erzeugen, das insbesondere eine Bandbreite zwischen 1 GHz und 5 GHz aufweist.

4. System nach einem der vorhergehenden Ansprüche, wobei die Radarvorrichtung eine 77-GHz-Band-Radarvorrichtung umfasst.

5. System nach einem der vorhergehenden Ansprüche, wobei die Milchtierpositionsbestimmungsvorrichtung dazu ausgelegt ist, mindestens schräg nach unten auf das Milchtier im Melkstand zu schauen und die Position eines hinteren Endes des Milchtiers als die Tierposition zu bestimmen.

6. System nach Anspruch 5, wobei die Steuereinheit ferner Informationen über eine Position der Zitzen mit Bezug auf die Position des hinteren Endes des Milchtiers enthält.

7. System nach einem der vorhergehenden Ansprüche, wobei die Steuervorrichtung dazu ausgelegt ist, auf Basis der bestimmten Tierposition den Roboterarm zum Schwenken unter dem Milchtier in eine Startposition zu bringen.

8. System nach einem der vorhergehenden Ansprüche, wobei die Steuervorrichtung dazu ausgelegt ist, beim Durchführen des zitzenbezogenen Vorgangs die Tierposition zu verfolgen.

9. System nach einem der vorhergehenden Ansprüche, wobei der Behandlungsort einen Melkstand auf festem Boden oder einer drehbaren Plattform umfasst.

10. System nach einem der vorhergehenden Ansprüche, wobei die Behandlungsvorrichtung zu mindestens einem vom Reinigen, Stimulieren, Melken und Besprühen einer Zitze des Milchtiers ausgelegt ist und insbesondere einen Zitzenbecher, eine Zitzenbürste und/oder eine Sprühdüse umfasst.

## Revendications

1. Système de traitement d'animal laitier (1) pour réaliser de façon entièrement automatique une opération connexe à trayon sur un animal laitier, comprenant :
- un emplacement de traitement (2) pour recevoir l'animal laitier,
- un dispositif de traitement (7) qui est configuré pour réaliser l'opération connexe à trayon sur l'animal laitier,
- un dispositif de détection de trayon (8) pour déterminer une position de trayon du trayon de l'animal laitier,
- un dispositif de détermination de position d'animal laitier pour déterminer à plusieurs reprises une position d'animal dudit animal laitier par rapport à la stalle de traite et/ou au dispositif de détermination de position d'animal laitier,
- un bras robotisé (6) pour déplacer le dispositif de traitement vers le trayon, et
- un dispositif de commande (5) qui est configuré pour commander le bras robotisé sur la base de la position d'animal déterminée et de la position de trayon déterminée,
**caractérisé en ce que**
le dispositif de détermination de position d'animal laitier comprend un dispositif radar à longueur d'onde mm (3).

2. Système selon la revendication 1, dans lequel le dispositif radar comprend un dispositif radar à onde continue modulée en fréquence.

3. Système selon l'une des revendications précédentes, dans lequel le dispositif radar est configuré pour générer un chirp, en particulier ayant une largeur de bande comprise entre 1 GHz et 5 GHz.

4. Système selon l'une des revendications précédentes, dans lequel le dispositif radar comprend un dispositif radar à bande de 77 GHz.

5. Système selon l'une des revendications précédentes, dans lequel le dispositif de détermination de position d'animal laitier est configuré pour au moins regarder obliquement d'en haut l'animal laitier dans la stalle de traite et pour déterminer la position d'une extrémité postérieure de l'animal laitier en tant que position d'animal.

6. Système selon la revendication 5, dans lequel l'unité de commande contient en outre des informations concernant une position des trayons par rapport à ladite position de l'extrémité postérieure dudit animal laitier.

7. Système selon l'une des revendications précédentes, dans lequel le dispositif de commande est configuré pour amener le bras robotisé dans une position de départ pour se balancer en dessous de l'animal laitier sur la base de la position d'animal déterminée.

8. Système selon l'une des revendications précédentes, dans lequel le dispositif de commande est configuré pour suivre ladite position d'animal tout en réalisant l'opération connexe à trayon.

9. Système selon l'une des revendications précédentes, dans lequel l'emplacement de traitement comprend une stalle de traite sur un sol solide ou sur une plate-forme rotative.

10. Système selon l'une des revendications précédentes, dans lequel le dispositif de traitement est configuré pour nettoyer et/ou stimuler et/ou traire et/ou pulvériser un trayon de l'animal laitier, et comprend en particulier un gobelet trayeur, une brosse pour trayon et/ou une buse de pulvérisation.
